# FASCICULE DE BREVET EUROPEEN

(11) **EP 3 424 681 B1**
(45) Date de publication et mention de la délivrance du brevet: **28.04.2021**
(21) Numéro de dépôt: 18305705.8
(22) Date de dépôt: 11.06.2018
(51) Int. Cl.: B29C 49/36, B29C 49/42, B65G 29/00

(54) **DISPOSITIF DE TRAITEMENT DE RECIPIENTS ET DISPOSITIF D'ENTRAINEMENT ASSOCIE**
VORRICHTUNG ZUR BEHANDLUNG VON BEHÄLTERN, UND ENTSPRECHENDE ANTRIEBSVORRICHTUNG
CONTAINER PROCESSING DEVICE AND ASSOCIATED DRIVE DEVICE

(30) Priorité: 03.07.2017 FR 1756247
(43) Date de publication de la demande: 09.01.2019
(73) Titulaire: Sidel Participations, 76930 Octeville-sur-Mer (FR)
(72) Inventeur: PASQUIER, Hervé, 76930 Octeville-sur-mer (FR); SANTAIS, Franck, 76930 Octeville-sur-mer (FR)
(74) Mandataire: Sidel Group

(56) Documents cités:
- EP-A2- 2 226 274
- DE-A1- 4 308 412
- US-A1- 2011 056 809
- US-B2- 9 598 198

## Description

La présente invention concerne le domaine de la fabrication de récipients (notamment bouteilles, flacons) par formage à partir de préformes en matière plastique, telle que par exemple le polyéthylène téréphtalate (PET).

Dans la suite de la description, lorsque la distinction ne sera pas nécessaire, les récipients initiaux ou intermédiaires (préformes ou ébauches), de même que les récipients finaux (bouteilles ou autres) seront désignés par le terme général de récipient(s). Sinon, la distinction sera faite.

La production et le traitement en grande série de tels récipients finaux est réalisée au moyen d'une installation qui comporte plusieurs postes de traitement parmi lesquelles on retrouve au moins un poste de chauffage des préformes ou ébauches et une machine de formage qui est équipé de plusieurs stations de formage comprenant chacune un moule. L'installation peut être complétée par divers autres postes, par exemple un poste de stérilisation des récipients, un poste d'étiquetage des récipients finis, une machine de remplissage des récipients finis, une machine de bouchage des récipients remplis...

Dans la suite de la description, à moins qu'il ne soit nécessaire de distinguer, le terme "traitement" s'appliquera indifféremment à la fabrication de récipients finaux ou à l'un ou l'autre de leurs traitements ultérieurs (remplissage, étiquetage, bouchage, etc.).

Pour permettre de traiter des récipients à cadence élevée, il est connu que les récipients défilent à travers chacune des stations. A cet effet, chaque station est couplée à un dispositif de transport des récipients.

Il est par exemple prévu que chaque machine comprenne une roue sur laquelle sont montées des stations de traitement, la roue étant mobile en rotation et transportant les récipients pendant leur traitement dans les stations de traitement.

On connaît par exemple des machines de formage de préformes en récipients de ce genre, dans lesquelles les préformes sont formées en récipients pendant qu'elles se déplacent selon un trajet circulaire défini par la roue de la machine de formage entre un point d'entrée et un point de sortie de la machine.

Lorsque les récipients doivent être soumis à plus d'un procédé, l'installation de production comprend par exemple des roues successives se déplaçant en rotation le long d'axes parallèles, comportant chacune des stations agencées pour exécuter l'un des procédés. Les récipients sont déplacés à travers l'installation, d'une roue à la suivante, et sont reçus chacun dans une station de chaque roue où ils sont soumis à un processus alors qu'ils se déplacent en rotation sur chaque roue. Ces roues, ou carrousels, tournent de manière continue autour d'un axe en étant entraîné en rotation par un élément d'entraînement (par exemple denture d'engrenage ou de chaîne, gorge de poulie). L'élément d'entraînement peut être intégré à la roue ou fixé à la roue. La roue porte à sa périphérie une série de stations de traitement identiques.

Dans une installation de fabrication de récipients, des dispositifs de transfert ou de convoyage sont mis en œuvre pour réaliser successivement les différentes opérations de transport qui jalonnent les étapes du procédé de fabrication.

De telles machines offrent un débit satisfaisant de récipients traités étant donné que les procédés sont réalisés en parallèle, une roue effectuant un processus sur un ensemble de récipients alors qu'une autre roue effectue un autre processus sur un autre ensemble de récipients. Les procédés sont donc réalisés en parallèle sur différents ensembles de récipients.

A titre d'exemples non limitatifs, on pourra se reporter pour de plus amples détails au document indiqué ci-après pour illustrer de telles machines.

On connait par exemple des dispositifs de transmission comprenant des poulies et de courroies de transmission qui assurent une mise en rotation des différentes roues par leur élément d'entraînement. Ces courroies élastiques peuvent créées une instabilité du système.

L'emploi de moteurs asynchrones est également connu. Ce type de moteur fonctionne principalement en asservissement de vitesse et transmet les vitesses des roues de traitement et de transfert. Cependant, un système fonctionnant en asservissement de vitesse entraine des variations de positions. En outre, les moteurs asynchrones ont souvent une performance dynamique limitée, ce qui peut être problématique en particulier lors d'une rampe de décélération.

Le document EP2226274 décrit un dispositif d'entraînement d'une roue de traitement de récipients. Ce dispositif comprend un moteur entraînant en rotation un pignon moteur par un arbre de transmission. Le pignon moteur coopère directement avec une couronne d'orientation d'une roue de traitement de récipients.

Un besoin existe de maîtriser la position angulaire de la roue de traitement. Par exemple il est nécessaire de synchroniser correctement la position des pinces d'une roue de transfert avec la position de la station de traitement avec laquelle la pince doit coopérer. Pour cela, il est connu d'utiliser codeur de position angulaire. Lorsque la roue de traitement fait un tour, le pignon moteur fait «K» tours, correspondant au rapport d'engrènement du pignon moteur sur la route de traitement.

Cependant, en cas d'interruption d'énergie, il y a un décalage temporel entre l'arrêt du codage et l'arrêt physique des roues de traitement et de transfert. L'inventeur s'est rendu compte que la réinitialisation du codage de position angulaire de la roue de traitement et des pinces de transfert correspondantes était délicate si un arrêt imprévu de l'énergie avait provoqué un arrêt physique des roues de transfert et de traitement dans une position inconnue.

En particulier, l'inventeur s'est rendu compte qu'une série très réduite de rapport de transmission «K» permet de réaliser une réinitialisation simple ainsi qu'il sera décrit dans la description de l'invention. Pour la machine décrite dans le document EP2226274, l'obtention de ce rapport de transmission privilégié est possible pour une configuration donnée de machine. Cependant ce type de dispositif d'entrainement rend difficile la standardisation des composants pour une gamme de machine. Par exemple, la conception décrite dans le document EP2226274 rend difficile d'utiliser des rapports de transmission privilégié permettant une identification angulaire simple pour une gamme de de machines ayant les unes une roue de soufflage ayant 34 stations de soufflage embarquées et d'autre machines ayant une roue de soufflage plus petite avec uniquement 8 stations de soufflage.

En outre, dans le dispositif d'entraînement décrit dans EP2226274, le moteur est très proche de l'élément d'entraînement de la roue de formage. Par conséquent, lorsqu'une opération de maintenance du moteur est nécessaire, la proximité du moteur et de la roue de formage complexifie l'opération de retrait du moteur et entraîne une perte de temps sur la cadence de production des machines. "Par ailleurs, le document US9598198 décrit une machine ayant une table rotative équipée de plusieurs stations de traitement de récipients. Le document DE4308412 décrit un dispositif pour positionner des articles à haute cadence".

Par ailleurs, le document US9598198 décrit une machine ayant une table rotative équipée de plusieurs stations de traitement de récipients. Le document DE4308412 décrit un dispositif pour positionner des articles à haute cadence.

Le but de la présente invention est notamment de remédier aux inconvénients précités de l'état de la technique.

A cet effet, l'invention a notamment pour objet un dispositif pour le traitement de récipients, comprenant :
- une roue de traitement de récipients pourvue circonférentiellement d'une pluralité de stations de traitement de récipients, la roue de traitement de récipients étant mobile en rotation autour d'un axe, et comportant un élément d'entraînement intégré à ou fixé à la roue de traitement de récipient, et
- un dispositif d'entraînement en rotation de la roue de traitement de récipients, coopérant avec l'élément d'entraînement, le dispositif d'entraînement comprenant un moteur d'entraînement équipé d'un pignon moteur solidaire en rotation avec un rotor du moteur d'entraînement synchrone, caractérisé en ce que le dispositif d'entraînement comprend en outre :
- un codeur de la position angulaire en cours du pignon moteur et
- au moins un pignon intermédiaire, non- coaxial avec le pignon moteur, solidaire en rotation avec le pignon moteur et disposé entre le pignon moteur et l'élément d'entraînement, de sorte que la rotation du moteur d'entraînement entraîne celle de la roue de traitement de récipients par l'intermédiaire du pignon moteur et du pignon intermédiaire.

Un exemple particulier, non obligatoire, de série de rapport de transmission privilégiés évoquée plus haut, entre le pignon moteur, dont la position angulaire est codée, et la roue de traitement est que ce rapport de transmission soit 2ⁿ, où « n » est un nombre entier. En effet, si le pignon moteur dont la position angulaire est connue précisément fait 2, 4, 8, 16, 32, 64 tours pendant que la roue de traitement fait un seul tour. Au bout de ces 2ⁿ tours de pignon moteur, non seulement la position relative entre le pignon moteur est la roue de traitement revient exactement à l'identique. Mais en plus, les codages de positions enregistrées reviennent eux aussi à la même configuration, tel ne serait pas le cas par exemple si le pignon moteur tournait 49 fois plus vite que la roue de traitement.

On comprend que dès lors que le fait d'introduire un pignon intermédiaire entre la roue de traitement et le pignon dont la position angulaire est codée, permet d'avoir un degré de liberté supplémentaire, pour optimiser à la fois le rapport de transmission global (K), tout en optimisant une autre caractéristique. Dans le mode de réalisation de dispositif d'entrainement ci-dessus, on peut avoir K=K1*K2, où K1 est le rapport de transmission entre le pignon moteur et le pignon intermédiaire, et K2 est le rapport de transmission entre le pignon intermédiaire et le roue de traitement. Par exemple, l'optimisation du rapport global (K) peut être de choisir ce rapport parmi la série des rapports privilégiés. L'autre caractéristique à optimiser peut être la résistance mécanique du pignon moteur, ou la vitesse de rotation de croisière du moteur d'entrainement. Cela peut aussi être d'utiliser le même moteur pour plusieurs configurations d'une gamme de machine. Toutefois, dans le mode de réalisation ci-dessus, le pignon intermédiaire peut ne pas contribuer au rapport de transmission global, c'est-à-dire qu'on peut avoir K=K1. Dans ce cas, le degré de liberté supplémentaire est spatial. La présence du pignon intermédiaire éloigne le moteur d'entrainement de la roue de traitement. Cela facilite la maintenance de ce moteur d'entrainement.

Autrement dit, les inventeurs de la présente invention ont découvert que placer un pignon intermédiaire entre un pignon moteur et un élément d'entraînement d'une roue de traitement de récipients permet d'obtenir un rapport de réduction de 2ⁿ entre le moteur et la roue de traitement de récipients tout en supprimant les problèmes de dimensionnement du pignon moteur par rapport à l'élément d'entraînement de la roue. En effet, le pignon intermédiaire peut être dimensionné pour offrir ce rapport de réduction quelle que soit la taille du pignon moteur et de l'élément d'entraînement. Toutefois, ce mode de réalisation n'est pas limité à l'utilisation d'un rapport de transmission de 2ⁿ.

L'introduction d'un pignon intermédiaire entre le pignon moteur et l'élément d'entraînement de la roue présente l'avantage d'augmenter la plage de rapports de réduction entre le moteur et la roue de traitement de récipients.

L'augmentation de la plage de rapports de réduction élargit le choix possible de diamètres pour le pignon intermédiaire ainsi que pour la roue de traitement de récipients. Cela permet également d'adapter le couple nominal du moteur au reste du système.

L'utilisation d'un tel pignon permet de rendre la transmission rigide afin de suivre les accélérations ou décélération et de supprimer les variations de positions provoquées par l'élasticité des courroies.

Le dispositif d'entraînement selon l'invention permet également d'éloigner le moteur de l'élément d'entraînement de la roue de traitement de récipients. Cela a pour avantage de faciliter l'accès au moteur et ainsi la maintenance, qui peut être effectuée plus rapidement.

En effet, les cadences de fabrication toujours plus élevées nécessitent une réactivité croissante, et l'optimisation des opérations à effectuer.

Selon une caractéristique du dispositif selon l'invention, le diamètre du pignon intermédiaire est fixé de sorte qu'un rapport de réduction calculé entre le pignon moteur et la roue de traitement de récipients est égal à 2ⁿ, n'étant un nombre entier. Comme précisé plus haut, l'obtention d'un rapport de réduction de 2ⁿ entre le moteur et la roue de traitement de récipients permet de garantir qu'au bout de 2ⁿ tours du pignon moteur, monobloc avec le codeur, la roue de traitement revient à la même position. Cela permet au codeur de fournir une position exacte de la position de la roue de traitement. Cela permet par exemple d'appairer à tout moment un élément de préhension à une station de traitement ou deux stations de machines différentes entre elles.

Selon une caractéristique du dispositif selon l'invention, le dispositif d'entraînement comprend au moins deux pignons intermédiaires de diamètre différents.

La présence d'au moins deux pignons intermédiaires augmente encore davantage la plage de rapports de réduction entre le moteur et la roue de traitement de récipients et, par voie de conséquence, le choix possible de diamètres pour le pignon intermédiaire ainsi que pour la roue de traitement de récipients.

Selon une caractéristique du dispositif selon l'invention, le moteur (84) d'entrainement, est un moteur électrique synchrone. Le moteur synchrone permet d'obtenir une vitesse moyenne strictement égale à la consigne. Cela permet d'améliorer la synchronisation entre la roue de traitement et, par exemple, une roue de transfert devant coopérer avec la roue de traitement.

Selon une caractéristique du dispositif selon l'invention, la roue de traitement de récipients est une roue de formage de récipients à partir de préformes, comprenant une pluralité de stations de formage comprenant chacune un moule destiné à recevoir des préformes ou des récipients.

Dans le cadre de l'invention, l'adaptation à une roue de formage donne une latitude plus grande dans le choix du diamètre de la roue de formage et permet ainsi d'adapter le nombre de stations de formage portées par la roue à la cadence de fabrication souhaitée.

Selon une caractéristique du dispositif selon l'invention, l'élément d'entraînement est une couronne d'orientation s'étendant à la circonférence de la roue de traitement de récipients et au contact direct de ladite roue de traitement de récipients. Une couronne d'orientation solidaire à la roue de traitement de récipients permet de limiter les éléments de transmission entre la couronne et la roue, et également de réduire l'encombrement de l'installation.

Selon une caractéristique du dispositif selon l'invention, l'élément d'entraînement est pourvu d'une denture droite. La denture droite permet de disposer l'élément d'entraînement et les autres pièces du dispositif d'entraînement dans un même plan, cela facilite la mise en œuvre du dispositif d'entraînement et limite son encombrement. Selon une caractéristique le pignon intermédiaire comprend une roue dentée.

L'invention concerne également une installation de fabrication de récipients. L'installation comprend au moins :
- un dispositif de traitement de récipients précité, et
- un dispositif de transfert de récipients depuis ou vers la roue de traitement de récipients, le dispositif de transfert étant une roue pourvue circonférentiellement d'une pluralité d'éléments de préhension de récipients et étant apte à entrer en rotation autour d'un axe sensiblement parallèle à l'axe O de rotation de la roue de traitement de récipients.

Avantageusement, le dispositif (50, 50') de transfert comporte au moins un élément (54) de préhension pour une station (M) de traitement de récipients.

La possibilité d'association d'un élément de préhension à une pluralité de stations de traitement permet de moduler le diamètre des dispositifs de transfert et ainsi de diminuer l'encombrement de l'installation.

Selon une autre caractéristique de l'installation selon l'invention, comprend une unité de calcul reliée au dispositif de traitement de récipients et au dispositif de transfert de récipients et comprenant un logiciel conçu pour associer à chaque récipient traité ou à traiter, d'une part la station de traitement de la roue de traitement traitant ledit récipient traité ou à traiter et d'autre part l'élément de préhension transférant ledit récipient traité ou à traiter.

En d'autres termes, les récipients formés à partir de préformes étant passées par une station de traitement particulière d'une roue de traitement seront toujours alimentés ou récupérés par le même élément de préhension. Ainsi, on connaît le trajet suivi par une préforme et un récipient issu de la préforme dès que l'on connaît la station de traitement par laquelle la préforme ou le récipient passe.

D'autres caractéristiques et avantages de l'invention apparaîtront à la lecture de la description détaillée qui suit pour la compréhension de laquelle on se reportera aux dessins annexés dans lesquels :
- La figure 1 est une vue de dessus qui représente schématiquement une partie d'une installation de fabrication de récipients et qui illustre un exemple de transfert de récipients entre un dispositif de transfert et une roue de formage;
- la figure 1A est une vue de détail qui représente un exemple de récipient utilisé dans une installation de fabrication et illustre de manière non limitative une préforme ;
- la figure 2 est une vue en perspective du dispositif de la figure 1,;
- la figure 3 est une vue en coupe partielle d'un dispositif de traitement de récipients comprenant un dispositif d'entraînement selon l'invention.

Dans la description qui va suivre, des éléments identiques, similaires ou analogues seront désignés par les mêmes chiffres de référence. Dans la suite de la description, on adoptera à titre non limitatif les orientations longitudinale, verticale et transversale en référence au trièdre (L, V, T) représenté sur les figures, ainsi que les termes "avant" et "arrière" en référence à l'orientation longitudinale, ainsi que "supérieur" et "inférieur" en référence à l'orientation verticale et enfin "gauche" ou "droite" et "intérieur" ou "extérieur" en référence à l'orientation transversale.

Les termes "amont" et "aval" sont utilisés en référence au sens de circulation du flux d'objets, tels que les préformes ou les récipients, transférés à travers l'installation de fabrication.

L'invention concerne le domaine technique de la fabrication de récipients tels que des bouteilles, par exemple des bouteilles de boisson contenant de l'eau, de l'eau gazéifiée, des boissons gazeuses, des jus, des thés, des boissons énergétiques, des boissons alcoolisées, non alcooliques ou d'autres types de liquides, des produits de soins personnels ou ménagers, des produits pharmaceutiques, des produits visqueux alimentaires ou non tels que par exemple et s'y restreindre l'huile comestible, le ketchup, les yaourts, l'huile de moteur.

Plus précisément, l'invention concerne un dispositif de traitement de récipients comprenant des machines de formage, de remplissage ou de bouchage. Chaque machine est agencée pour recevoir des préformes successives, chacune réalisée en un matériau thermoplastique. Le matériau thermoplastique est par exemple choisi parmi les polyesters, tels que polyéthylène téréphtalate (PET), polyéthylène naphtalène (PEN), polyéthylène imine (PEI), polytriméthylène téréphtalate (PTT), acide polylactique (PLA), polyéthylène furanoate (PEF), ou les polyoléfines, tels que polyéthylène basse densité (LDPE) ou haute densité (HDPE), polypropylène (PP), ou des matériaux à base de styrène tel que le polystyrène (PS), ou d'autres polymères, tel que le chlorure de polyvinyle (PVC) ou un mélange de ces matériaux.

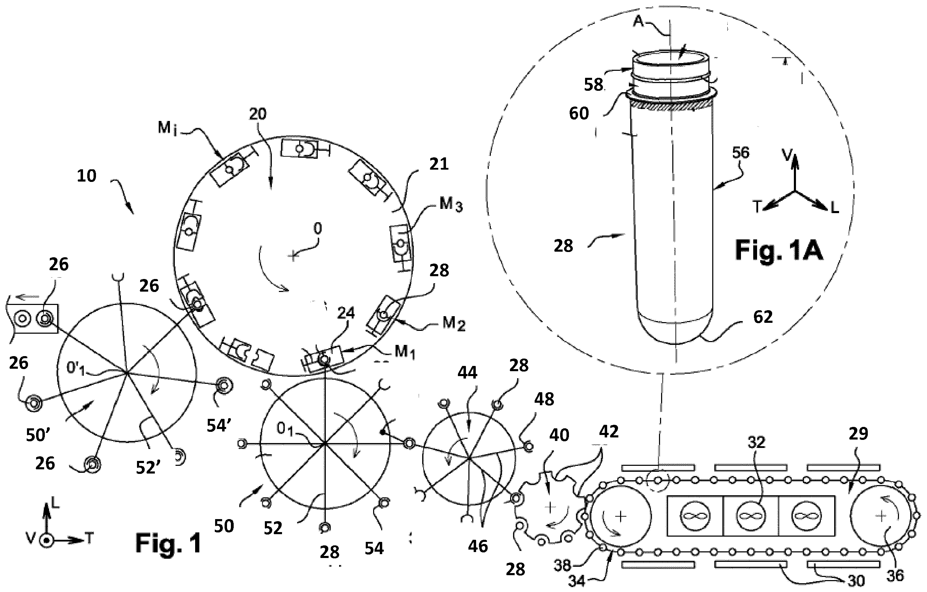

On a représenté sur la figure 1 une installation 10 de fabrication de récipients comportant une pluralité de machines de traitement de récipients. On va décrire une machine de traitement qui peut correspondre à une machine 20 de formage de récipients.

La machine 20 comprend une roue, ou carrousel 21 de traitement de récipients, par exemple une roue de formage montée mobile en rotation autour d'un axe O de rotation et pourvue circonférentiellement d'une pluralité de stations de traitement (M1, M2, M3, ... M,) par exemple des stations de formage, qui traitent les récipients d'une manière prédéterminée et, de préférence similaire, chaque station comportant notamment un moule **24.**

Le nombre de stations de traitement est par exemple compris entre 5 et 50, notamment entre 5 et 40, de préférence entre 8 et 34.

Chaque station M de traitement comporte par exemple une tuyère (non représentée ici) associée au moule 24 pour réaliser le formage d'un récipient **26** à partir d'une préforme **28** préalablement conditionnée thermiquement dans un four **29.**

Le four 29 comporte principalement des moyens **30** de chauffage associés à des moyens **32** de ventilation, les préformes 28 étant convoyées à travers le four 29 suivant un parcours de chauffe donné par l'intermédiaire d'un dispositif 34 de transport.

Le dispositif **34** de transport comporte par exemple à cet effet une chaîne sans fin mue par des moyens **36** d'entraînement et qui supporte une pluralité de moyens 38 de support d'une préforme 28, encore appelés parfois "tournettes", l'agencement desdits moyens 38 de support déterminant le pas entre deux préformes 28 consécutives.

De préférence, l'installation 10 comporte un premier dispositif **40** de transfert, lequel premier dispositif 40 de transfert comprend une roue de transfert pourvue circonférentiellement d'encoches **42** aptes à recevoir chacune une préforme 28.

La roue du premier dispositif 40 de transfert est entraînée en rotation suivant le sens horaire autour d'un axe central, c'est-à-dire dans le sens opposé à celui du déplacement du dispositif 34 de transport du four 29 comportant les moyens 38 de support des préformes 28.

De préférence, l'installation 10 comporte, en aval du premier dispositif 40 de transfert, un deuxième dispositif **44** de transfert, comprenant une roue de transfert qui est entraînée en rotation suivant le sens anti-horaire autour d'un axe central d'orientation verticale, c'est-à-dire suivant un sens de rotation opposé à celui du premier dispositif 40 de transfert. Le deuxième dispositif 44 de transfert comporte en outre des bras **46** de transfert pourvus chacun d'un élément de préhension **48** et montés sur la roue de transfert du deuxième dispositif 44 de transfert.

Un troisième dispositif **50** de transfert comprend une roue de transfert comportant une pluralité de bras **52** de transfert qui sont montés mobiles en rotation autour d'un axe 01 et dont chacun est pourvu, à leur extrémité libre, d'un élément **54** de préhension d'un objet, telle qu'ici une préforme 28 "chaude" prête à être transformée en un récipient 26 dans la machine 20. Un élément 54 de préhension est par exemple une pince de préhension, apte à saisir une préforme 28 de part et d'autre de son col.

Avantageusement, l'installation 10 comporte un autre dispositif **50'** de transfert qui, analogue au précédent référencé 50, est destiné à transférer vers l'aval les récipients 26 fabriqués par la machine 20 à partir des préformes 28 chaudes issues du four 29. Le dispositif 50' de transfert comprend notamment des éléments 54' de préhension d'un récipient 26 disposé au bout de bras 52' de transfert.

On a représenté en aval du dispositif 50' de transfert un système de convoyage des récipients 26 qui est apte à acheminer les récipients 26, par exemple vers une autre machine comportant au moins une machine de remplissage et une machine de bouchage.

En variante et de préférence, le dispositif 50' de transfert alimente, directement ou indirectement, au moins une telle machine assurant au moins le remplissage des récipients 26.

De préférence, le système de convoyage des récipients 26 situé en aval du dispositif 50' de transfert est similaire aux dispositifs de transfert 50 et 50'.

Dans une autre variante, non représentée, la machine de traitement peut être une machine de remplissage, la machine de traitement comprend par analogie une roue 21 de traitement de récipients qui est alors une roue de remplissage. Chacune des stations de remplissage comprend un dispositif d'alimentation qui alimente les récipients d'un fluide, par exemple un liquide.

On a représenté sur la figure 1A un agrandissement d'une préforme 28 dont la forme et les dimensions sont données uniquement à titre d'exemple non limitatif dès lors que les préformes 28 sont susceptibles d'en présenter de très variées.

Chaque préforme 28 comprend un corps **56,** un col **58** et une bague **60** de préhension. Le corps 56 présente par exemple la forme d'un tube à essai avec un fond **62** fermé et définit un volume interne s'étendant selon un axe principal A. Le col 58 s'étend dans la continuité du corps 56 à l'opposé du fond 62 et forme une ouverture supérieure par laquelle un fluide peut être introduit dans le volume interne de la préforme, comme cela sera décrit ultérieurement. Le col 58 de la préforme présente par exemple la forme définitive qu'il aura dans le récipient 52 formé à partir de la préforme 28 et comprend, par exemple, un filetage sur sa paroi externe pour permettre la fixation d'un bouchon sur le récipient. La bague 60 de préhension s'étend entre le corps 56 et le col 58 radialement vers l'extérieur et forme par exemple une bague de transport par laquelle la préforme peut être saisie et transportée, comme cela sera décrit ultérieurement.

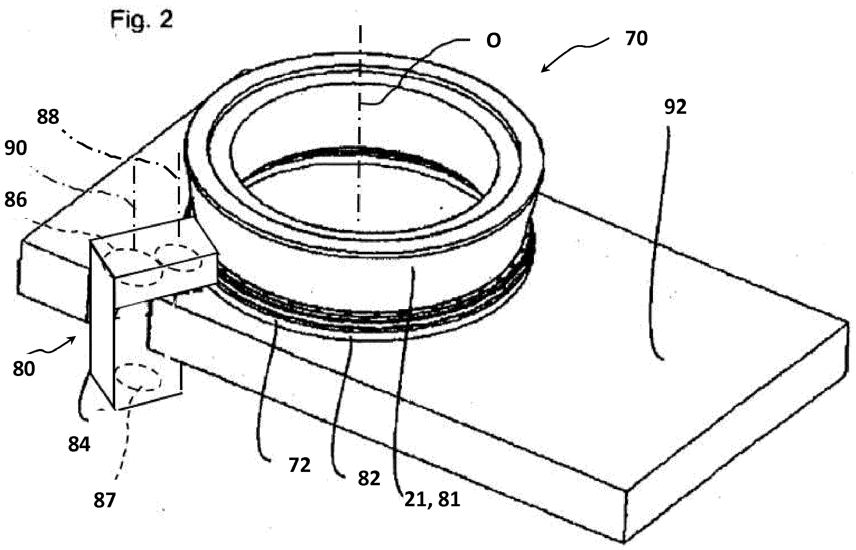

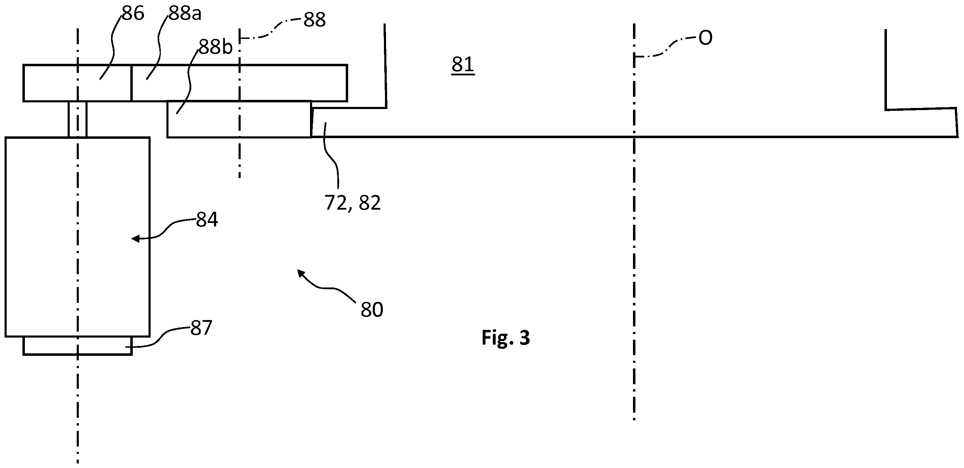

On a représenté sur les figures 2 et 3 un dispositif **70** de traitement de récipients comprenant une roue 21 de traitement de récipients pourvue d'un élément *72* d'entraînement et coopérant avec un dispositif **80** d'entraînement selon l'invention. Comme cela est décrit plus haut, une pluralité de stations (M1, M2, M3...) de traitement de récipients est agencée sur la roue 21 de traitement de récipients.

Selon l'exemple proposé, la roue 21 de traitement de récipients comporte un support **81** de forme sensiblement tronconique et présente un épaulement **82** perpendiculaire à l'axe de rotation O de la roue, l'élément 72 d'entraînement étant une couronne d'orientation sensiblement circulaire et montée circonférentiellement sur l'épaulement 82 de la roue 21, et par conséquent au contact direct de la roue 21. On entend ici par contact direct que le dispositif de traitement ne comprend pas d'élément d'entraînement intermédiaire entre la couronne d'orientation et la roue 21 de traitement de récipients. L'élément 72 d'entraînement est agencé pour tourner en rotation de manière monobloc avec la roue, il a le même axe de rotation que la roue. L'élément d'entrainement peut être une couronne fixée à la roue, cela peut être aussi des dentures intégrées monobloc avec une pièce de la roue.

La rotation de l'élément 72 d'entraînement entraîne la rotation de la roue 21 de traitement de récipients dans le même sens.

L'élément 72 d'entraînement a de préférence un diamètre compris entre 500 mm et 2 m, notamment entre 600 mm et 1,90 m, de préférence entre 700 mm et 1,80 m, et plus préférentiellement encore entre 800 mm et 1,60 m.

En mouvement, l'élément 72 d'entraînement supporte une masse comprise entre deux et trois tonnes.

Les variations de charge n'altèrent pas son fonctionnement et sa vitesse.

L'élément 72 d'entraînement est par exemple fixé à la roue 21 de traitement de récipients par une pluralité de raccords de visserie.

En variante, la liaison solidaire en rotation entre la roue 21 de traitement de récipients et l'élément 72 d'entraînement peut être conçue de telle sorte que la roue de traitement de récipients peut tourner par l'intermédiaire d'un arbre de transmission central disposé entre la roue 21 de traitement de récipients et l'élément 72d'entraînement.

De préférence, l'élément 72 d'entraînement présente circonférentiellement une denture extérieure destiné à coopérer avec des moyens d'engrènement complémentaires pour entraîner la roue 21 de traitement de récipients en rotation autour de l'axe O. Cependant, il serait également possible de prévoir sur l'élément 72 d'entraînement une denture intérieure.

Dans une autre forme de réalisation avantageuse, l'élément 72 d'entraînement est conçu directement sur la roue 21 de traitement de récipients, de sorte que par exemple, la roue 21 de traitement de récipients elle-même présente une denture extérieure, qui est à coopérer avec des moyens d'engrènement complémentaires pour entraîner la roue de traitement de récipients en rotation autour de l'axe O. Le dispositif 80 d'entraînement comprend un moteur 84 d'entraînement synchrone, un pignon 86 moteur et un pignon 88 intermédiaire disposé entre le pignon 86 moteur et l'élément 72 d'entraînement.

Le moteur 84 d'entraînement est un moteur synchrone comportant un rotor, un stator et un codeur 87.

De préférence, le moteur 84 d'entraînement est un moteur électrique, qui accélère et/ou freine la roue de traitement de récipients. On peut prévoir en particulier un moteur que l'on appelle couple. Un tel moteur couple ou de vitesse lente comporte un nombre élevé de pôles, un rotor généralement annulaire rainuré ayant un grand diamètre. La vitesse moyenne de tels moteurs de couple peut varier de un tour par minute à environ 1200 tours par minute par exemple. Le couple de ces moteurs peut atteindre une valeur allant jusqu'à 4000 Nm par exemple.

De préférence, le moteur 84 d'entraînement est disposé entièrement au-dessous de la roue 21 de traitement de récipients par rapport à la direction verticale. De cette manière, le fonctionnement de l'ensemble du système n'est pas entravé par le moteur 84 d'entraînement.

Le moteur 84 d'entraînement est du type moteur synchrone. Une partie tournante (ou rotor) du moteur 84 d'entrainement est solidaire en rotation avec un pignon 86 moteur et un arbre **90** de transmission entre le moteur et le pignon 86 moteur. Selon l'exemple présenté, l'arbre 90 de transmission s'étend verticalement et porte à son extrémité le pignon 86 moteur. L'arbre de transmission 90 est perpendiculaire à un plan comprenant la roue 21 de traitement de récipients.

Le moteur 84 d'entrainement est équipé d'un codeur 87 de position angulaire du pignon 86 moteur. Le pignon 86 moteur tourne monobloc avec une partie tournante (ou rotor) du codeur 87 de sorte que le codeur 87 renseigne à tout moment sur la position angulaire du pignon 86 moteur. La partie tournante du codeur 87 peut par exemple être monté à l'extrémité de l'arbre 90 de transmission, opposée au pignon 86 moteur..

De préférence, le pignon 86 moteur comporte circonférentiellement une denture destinée à coopérer avec des moyens d'engrènement complémentaires pour les entraîner en rotation.

Le pignon 86 moteur est entraîné en rotation par le moteur 84 d'entrainement et l'arbre de transmission 90. L'axe de rotation du pignon 86 moteur est parallèle à l'axe de rotation O de la roue 21 de traitement de récipients.

La roue 21 de traitement de récipients est ici entraînée par une denture droite. En variante, des roues coniques ou similaires sont utilisées.

Le dispositif d'entraînement comprend en outre un pignon 88 intermédiaire disposé entre le pignon 86 moteur et l'élément d'entraînement 72.

De préférence, le pignon 86 moteur comporte circonférentiellement une denture (non représentée) destinée à coopérer avec des moyens d'engrènement complémentaires de l'élément 72 d'entraînement pour entraîner en rotation sur lui-même l'élément 72d'entraînement.

Dans un autre mode de réalisation avantageux, le pignon 86 moteur et le pignon 88 intermédiaire sont chacun des roues dentées, un ensemble de dents de l'élément 72 d'entraînement coopère directement avec une denture correspondante du pignon intermédiaire 86, et un ensemble de dents du pignon intermédiaire coopère engrène directement une denture correspondante du pignon 86 moteur. De manière alternative, le pignon 86 moteur est solidaire en rotation avec le pignon 88 intermédiaire via une courroie crantée qui relie les deux pignons 86, 88.

Dans un mode de réalisation particulier, illustré en figure 3, le dispositif 80 d'entraînement peut comporter un premier pignon 88a intermédiaire et un deuxième pignon 88b intermédiaire. Les premier et deuxième pignons 88a et 88b intermédiaires sont coaxiaux, sont fixés l'un à l'autre ou forment un ensemble monobloc rigide, et présentent chacun un diamètre différent et un nombre de dents différents. L'axe de rotation des pignons intermédiaires 88a, 88b peut être parallèle à l'axe O de la roue 21 et/ou à l'axe de rotation du pignon 86 moteur. Le premier pignon 88a intermédiaire engrène avec le mignon 86 moteur, et le deuxième pignon 88b intermédiaire engrène avec l'élément 72 d'entrainement de la roue 21. Ainsi le rapport K de transmission entre le rotor du codeur 87 et la roue 21 est égale au produit d'un premier et d'un deuxième rapport K1, K2 de transmission. Dans l'exemple illustré en figure 3, le premier rapport K1 de transmission est égal au quotient du nombre de dents du premier pignon 88a intermédiaire divisé par le nombre de dents du pignon 86 moteur. Le deuxième rapport K2 de transmission est égal au quotient du nombre de dents de l'élément 72 d'entrainement de la roue 21 divisé par le nombre de dents du deuxième pignon 88b intermédiaire.

Dans une variante non représentée, les différents pignons 88 intermédiaires ne sont pas coaxiaux et sont toutefois disposés entre le pignon 86 moteur et le support 81. Les pignons intermédiaires 88 engrènent les uns avec les autres et entraînent la rotation du support 81. Le dispositif d'entraînement comporte par exemple deux pignons intermédiaires 88 ou plus. Le diamètre du ou des pignons intermédiaires 88 est fixé de sorte à obtenir un rapport de réduction tel que défini précédemment entre le pignon 86 moteur et la roue 21 de traitement égal à 2ⁿ, n étant un nombre entier. Le choix du nombre et du diamètre des pignons intermédiaires 88 permet de définir précisément le rapport de réduction souhaité entre le pignon moteur 86 et la roue 21 de traitement de récipients.

En fonctionnement, le moteur 84 d'entraînement entraîne en rotation l'arbre 90 de transmission du moteur qui entraîne à son tour le pignon 86 moteur. Le pignon 86 moteur entraîne alors le pignon 88 intermédiaire entraînant à son tour l'élément 72 d'entraînement.

Du fait de la présence du pignon 88 intermédiaire, le retrait du moteur 84 d'entrainement est aisé lors d'une opération de maintenance, notamment parce que le moteur 84 est radialement plus éloigné de la roue 21 de traitement.

Le dispositif 80 d'entraînement selon l'invention ne comporte pas de courroie ou d'autres moyens de transmission de puissance.

De cette manière, les pertes d'énergie par frottement ainsi que les pertes d'informations de position peuvent être évitées dans le système.

Dans un mode de réalisation avantageux, le dispositif 80 d'entrainement comprend un châssis **92** fixe (voir figure 2), le support 81 de la roue 21 de traitement de récipients étant monté de manière rotative par rapport au châssis. Le support 81 est par exemple monté de manière rotative par rapport au châssis 92 par l'intermédiaire d'un roulement à billes. De préférence, le châssis 92 précité comporte un évidement destiné à recevoir le moteur 84 d'entraînement et le pignon 88 intermédiaire.

De préférence, l'élément 72 d'entraînement, le pignon 88 intermédiaire et le pignon 86 moteur sont montés sur le support 81 de façon à améliorer la dynamique de l'installation. Ici, le dispositif 80 d'entraînement peut être utilisé à la fois pour accélérer et pour freiner la roue 21 de traitement de récipients. Selon cet exemple, il est également possible qu'une commande de l'entraînement soit conçue de telle sorte que l'énergie produite est conservée lors du freinage.

Dans ce mode de réalisation, il s'agit d'une machine rotative continue. Cependant, il serait également possible d'appliquer l'élément 72 d'entraînement selon l'invention à d'autres machines, et en particulier une machine cadencée..

Dans un autre mode de réalisation avantageux, le dispositif 80 d'entraînement comprend un moyen de freinage supplémentaire pour le freinage du support 81, de telle sorte qu'il comprend un frein mécanique en plus des freins électriques du moteur 84 d'entraînement.

Dans un autre mode de réalisation avantageux est prévue une pluralité de dispositifs 80 d'entraînement ou de moteurs 84 d'entraînement afin d'adapter le dispositif 80 d'entraînement aux dimensions de la machine 20 et donc d'augmenter la modularité d'un agencement correspondant.

Afin d'assurer la traçabilité d'un récipient dans l'installation, il est souhaitable d'associer par paires les éléments 54 de préhension et les stations M de traitement. En cas de défaut sur un récipient 26, il est alors possible et rapide d'identifier le couple élément 54 de préhension -station M de traitement qui a traité le récipient 26, et ainsi de trouver et de traiter le problème à l'origine de ce défaut. Si une opération de maintenance est nécessaire ou en cas de coupure de courant, la fabrication de récipients 26 est interrompue. Si les stations M de traitement et les éléments 54 de préhension sont appairés, leur position devient simple à retrouver.

L'installation comprend une unité centrale recevant les positions angulaires de chaque codeur de l'installation, et notamment le codeur 87 de position angulaire du pignon 86 moteur et un codeur angulaire pour chacune ou pour plusieurs des roues 36, 40, 44, 50, 50'. L'unité centrale génère des registres indiquant à chaque instant la position angulaire de chaque élément 54, 54' de préhension, et/ou de plusieurs ou chacune des stations M1, M2, ...Mi de traitement. Ainsi, l'unité centrale est avantageusement programmée pour établir pour associer à chaque récipient traité ou à traiter, d'une part la station M de traitement de la roue 21 de traitement traitant ledit récipient traité ou à traiter et d'autre part l'élément 54 de préhension du dispositif 50, 50' de transfert transférant ledit récipient traité ou à traiter.

L'obtention d'un rapport de réduction de 2ⁿ entre le moteur 84 et la roue 21 de traitement de récipients est particulièrement avantageuse pour réaliser cet appairage.

Dans un mode de réalisation préféré, l'installation 10 de fabrication de récipients comprend au moins une roue 21 de traitement de récipients et son dispositif 80 d'entraînement tels que décrits, et un dispositif 50, 50' de transfert de récipients tel que décrit destiné à transférer les récipients 26 issus de la roue 21 de traitements de récipients vers un autre dispositif ou à transférer des récipients 26 vers la roue de traitement de récipients est prévue. Le dispositif 50, 50' de transfert de récipients comprend des éléments 54 de préhension des récipients 26 telles que décrits ci-dessus.

Les éléments 54 de préhension sont de préférence en nombre inférieur au nombre d'stations M de traitements de récipients 26, et chaque élément 54 de préhension est adaptée à la préhension d'un unique récipient 26 d'une station M de traitement. Par exemple, le dispositif 50, 50' de transfert comporte au moins un élément 54 de préhension pour une station M de traitement de récipients.

Selon un mode de réalisation, un élément 54 de préhension identifié est associé à au moins deux stations M de traitement correspondantes, c'est-à-dire qu'un élément 54 de préhension peut fournir un récipient à deux stations M de traitement correspondantes.

## Revendications

1. Dispositif (70) de traitement de récipients, comprenant :
- une roue (21) de traitement de récipients pourvue circonférentiellement d'une pluralité de stations (M) de traitement de récipients, la roue (21) de traitement de récipients étant mobile en rotation autour d'un axe (O), et comportant un élément (72) d'entraînement intégré à ou fixé à la roue (21) de traitement de récipient, et
- un dispositif (80) d'entraînement en rotation de la roue (21) de traitement de récipients, coopérant avec l'élément (72) d'entraînement, le dispositif (80) d'entraînement comprenant un moteur (84) d'entraînement équipé d'un pignon (86) moteur solidaire en rotation avec un rotor du moteur (84) d'entraînement synchrone, et
- un codeur (87) de la position angulaire en cours du pignon (86) moteur;
**caractérisé en ce que** le dispositif (80) d'entraînement comprend en outre : au moins un pignon (88) intermédiaire , non- coaxial avec le pignon (86) moteur, solidaire en rotation avec le pignon (86) moteur et disposé entre le pignon (86) moteur et l'élément (72) d'entraînement, de sorte que la rotation du moteur (84) d'entraînement entraîne celle de la roue (21) de traitement de récipients par l'intermédiaire du pignon (86) moteur et du pignon (88) intermédiaire, le diamètre du pignon (88) intermédiaire étant fixé de sorte qu'un rapport de réduction calculé entre le pignon (86) moteur et la roue (21) de traitement de récipients est égal à 2ⁿ, n'étant un nombre entier.

2. Dispositif (70) selon la revendication 1, dans lequel le dispositif (80) d'entraînement comprend au moins deux pignons intermédiaires (88) de diamètres différents.

3. Dispositif (70) selon l'une quelconque des revendications précédentes, dans lequel le moteur (84) d'entrainement, est un moteur électrique synchrone.

4. Dispositif (70) selon l'une quelconque des revendications précédentes, dans lequel la roue (21) de traitement de récipients est une roue de formage de récipients (26) à partir de préformes (28), comprenant une pluralité de stations (M) de formage comprenant chacune un moule (24) destiné à recevoir des préformes (28) ou des récipients (26).

5. Dispositif (70) selon l'une quelconque des revendications précédentes, dans lequel l'élément (72) d'entraînement est une couronne d'orientation s'étendant à la circonférence de la roue (21) de traitement de récipients et au contact direct de ladite roue (21) de traitement de récipients.

6. Dispositif (70) selon l'une quelconque des revendications précédentes, dans lequel l'élément (72) d'entraînement est pourvu d'une denture droite et/ou le pignon (88) intermédiaire comprend une roue dentée.

7. Installation (10) de fabrication de récipients comprenant au moins :
- Un dispositif (70) de traitement de récipients selon l'une quelconque des revendications précédentes, et
- un dispositif (50,50') de transfert de récipients depuis ou vers la roue (21) de traitement de récipients, le dispositif (50, 50') de transfert étant une roue pourvue circonférentiellement d'une pluralité d'éléments (54) de préhension de récipients (26) et étant apte à entrer en rotation autour d'un axe sensiblement parallèle à l'axe O de rotation de la roue (21) de traitement de récipients.

8. Installation (10) de fabrication de récipients selon la revendication 7, dans laquelle le dispositif (50, 50') de transfert comporte au moins un élément (54) de préhension pour une station (M) de traitement de récipients.

9. Installation (10) de fabrication de récipients selon la revendication 7 ou 8, comprenant une unité de calcul reliée au dispositif (70) de traitement de récipients et au dispositif (50 , 50') de transfert de récipients et comprenant un logiciel conçu pour associer à chaque récipient traité ou à traiter, d'une part la station (M) de traitement de la roue (21) de traitement traitant ledit récipient traité ou à traiter et d'autre part l'élément (54) de préhension transférant ledit récipient traité ou à traiter.

## Patentansprüche

1. Vorrichtung (70) zur Behandlung von Behältern, die Folgendes beinhaltet:
- ein Rad (21) zur Behandlung von Behältern, das an seinem Umfang über eine Vielzahl von Stationen (M) zur Behandlung von Behältern verfügt, wobei das Rad (21) zur Behandlung von Behältern um eine Achse (O) drehbeweglich ist und ein Antriebselement (72) umfasst, das in das Rad (21) zur Behandlung von Behältern integriert oder an diesem befestigt ist, und
- eine Drehantriebsvorrichtung (80) für das Rad (21) zur Behandlung von Behältern, die mit dem Antriebselement (72) zusammenwirkt, wobei die Antriebsvorrichtung (80) einen Antriebsmotor (84) beinhaltet, der mit einem Motorritzel (86) ausgerüstet ist, das mit einem Rotor des Antriebssynchronmotors (84) drehfest verbunden ist, und
- einen Geber (87) der aktuellen Winkelposition des Motorritzels (86);
**dadurch gekennzeichnet, dass** die Antriebsvorrichtung (80) ferner Folgendes beinhaltet: mindestens ein Zwischenritzel (88), das nicht koaxial zu dem Motorritzel (86) ist, drehfest mit dem Motorritzel (86) verbunden ist und zwischen dem Motorritzel (86) und dem Antriebselement (72) angeordnet ist, sodass die Drehung des Antriebsmotors (84) mittels des Motorritzels (86) und des Zwischenritzels (88) die Drehung des Rades (21) zur Behandlung von Behältern bewirkt, wobei der Durchmesser des Zwischenritzels (88) so festgelegt ist, dass ein zwischen dem Motorritzel (86) und dem Rad (21) zur Behandlung von Behältern berechnetes Übersetzungsverhältnis gleich 2ⁿ ist, wobei n eine ganze Zahl ist.

2. Vorrichtung (70) nach Anspruch 1, wobei die Antriebsvorrichtung (80) mindestens zwei Zwischenritzel (88) mit unterschiedlichen Durchmessern beinhaltet.

3. Vorrichtung (70) nach einem der vorhergehenden Ansprüche, wobei der Antriebsmotor (84) ein elektrischer Synchronmotor ist.

4. Vorrichtung (70) nach einem der vorhergehenden Ansprüche, wobei das Rad (21) zur Behandlung von Behältern ein Rad zur Formung von Behältern (26) aus Vorformlingen (28) ist, das eine Vielzahl von Formungsstationen (M) beinhaltet, die jeweils eine Form (24) beinhalten, die dazu bestimmt ist, Vorformlinge (28) oder Behälter (26) aufzunehmen.

5. Vorrichtung (70) nach einem der vorhergehenden Ansprüche, wobei das Antriebselement (72) ein Drehkranz ist, der sich um den Umfang des Rades (21) zur Behandlung von Behältern erstreckt und sich in direktem Kontakt mit dem Rad (21) zur Behandlung von Behältern befindet.

6. Vorrichtung (70) nach einem der vorhergehenden Ansprüche, wobei das Antriebselement (72) über eine Geradverzahnung verfügt und/oder das Zwischenritzel (88) ein Zahnrad beinhaltet.

7. Anlage (10) zur Fertigung von Behältern, die mindestens Folgendes beinhaltet:
- eine Vorrichtung (70) zur Behandlung von Behältern nach einem der vorhergehenden Ansprüche und
- eine Vorrichtung (50, 50') für den Transfer von Behältern von oder zu dem Rad (21) zur Behandlung von Behältern, wobei die Transfervorrichtung (50, 50') ein Rad ist, das an seinem Umfang über eine Vielzahl von Elementen (54) zum Greifen von Behältern (26) verfügt und dazu fähig ist, sich um eine Achse zu drehen, die zu der Drehachse O des Rades (21) zur Behandlung von Behältern im Wesentlichen parallel ist.

8. Anlage (10) zur Fertigung von Behältern nach Anspruch 7, wobei die Transfervorrichtung (50, 50') mindestens ein Greifelement (54) für eine Station (M) zur Behandlung von Behältern umfasst.

9. Anlage (10) zur Fertigung von Behältern nach Anspruch 7 oder 8, die eine Recheneinheit beinhaltet, die mit der Vorrichtung (70) zur Behandlung von Behältern und mit der Vorrichtung (50, 50') für den Transfer von Behältern verbunden ist und eine Software beinhaltet, die dazu ausgelegt ist, jedem behandelten oder zu behandelnden Behälter einerseits die Behandlungsstation (M) des Rades (21) zur Behandlung von Behältern, die den behandelten oder zu behandelnden Behälter behandelt, und andererseits das Greifelement (54), das den behandelten oder zu behandelnden Behälter transferiert, zuzuordnen.

## Claims

1. Container-processing device (70) comprising:
- a container-processing wheel (21) provided circumferentially with a plurality of container-processing stations (M), the container-processing wheel (21) being able to rotate about an axis (O), and comprising a drive element (72) integrated with or fixed to the container-processing wheel (21), and
- a device (80) for rotationally driving the container-processing wheel (21), cooperating with the drive element (72), the drive device (80) comprising a drive motor (84) equipped with a motor pinion (86) coupled in rotation with a rotor of the synchronous drive motor (84), and
- an encoder (87) of the current angular position of the motor pinion (86),
**characterized in that** the drive device (80) additionally comprises: at least one intermediate pinion (88), not coaxial with the motor pinion (86), coupled in rotation with the motor pinion (86) and arranged between the motor pinion (86) and the drive element (72), such that the rotation of the drive motor (84) drives the rotation of the container-processing wheel (21) via the motor pinion (86) and the intermediate pinion (88), the diameter of the intermediate pinion (88) being fixed such that a reduction ratio calculated between the motor pinion (86) and the container-processing wheel (21) is equal to 2ⁿ, n being a whole number.

2. Device (70) according to Claim 1, in which the drive device (80) comprises at least two intermediate pinions (88) of different diameters.

3. Device (70) according to either one of the preceding claims, in which the drive motor (84) is a synchronous electric motor.

4. Device (70) according to any one of the preceding claims, in which the container-processing wheel (21) is a wheel for forming containers (26) from preforms (28), comprising a plurality of forming stations (M) each comprising a mould (24) intended to receive preforms (28) or containers (26).

5. Device (70) according to any one of the preceding claims, in which the drive element (72) is an orientation ring extending at the circumference of the container-processing wheel (21) and in direct contact with said container-processing wheel (21).

6. Device (70) according to any one of the preceding claims, in which the drive element (72) is provided with a straight toothing and/or the intermediate pinion (88) comprises a toothed wheel.

7. Container-manufacturing installation (10) comprising at least:
- a container-processing device (70) according to any one of the preceding claims, and
- a device (50, 50') for transferring containers from or to the container-processing wheel (21), the transfer device (50, 50') being a wheel provided circumferentially with a plurality of elements (54) for gripping containers (26) and being able to enter into rotation about an axis substantially parallel to the axis O of rotation of the container-processing wheel (21).

8. Container-manufacturing installation (10) according to Claim 7, in which the transfer device (50, 50') comprises at least one gripping element (54) for one container-processing station (M).

9. Container-manufacturing installation (10) according to Claim 7 or 8, comprising a computing unit connected to the container-processing device (70) and to the container-transfer device (50, 50') and comprising software designed to assign to each processed or to-be-processed container, on the one hand, the processing station (M) of the processing wheel (21) processing said processed or to-be-processed container, and, on the other hand, the gripping element (54) transferring said processed or to-be-processed container.
